# EUROPEAN PATENT SPECIFICATION

(11) **EP 2 854 427 B1**
(45) Date of publication and mention of the grant of the patent: **01.08.2018**
(21) Application number: 12879892.3
(22) Date of filing: 29.06.2012
(51) Int. Cl.: H04W 4/06, H04L 29/06, H04W 72/00, H04W 76/00

(54) **SESSION PROCESSING METHOD AND DEVICE**
SITZUNGSVERARBEITUNGSVERFAHREN UND VORRICHTUNG
PROCÉDÉ ET DISPOSITIF DE TRAITEMENT DE SESSION

(43) Date of publication of application: 01.04.2015
(73) Proprietor: Huawei Technologies Co., Ltd., Longgang District Shenzhen, Guangdong 518129 (CN)
(72) Inventor: LONG, Sirui, Shenzhen Guangdong 518129 (CN)
(74) Representative: Goddar, Heinz J.
(86) International application number: PCT/CN2012/077978
(87) International publication number: WO 2014/000289

(56) References cited:
- WO-A1-2012/063813
- CN-A- 102 418 019
- CN-A- 102 448 018
- CN-A- 102 651 852
- CN-B- 101 155 379
- MA, ZIJIANG ET AL. KEY TECHNOLOGIES IN LTE MBMS vol. 17, no. 5, October 2011, pages 34 - 38, XP008174428

## Description

### TECHNICAL FIELD

The present invention relates to the field of communications technologies, and in particular, to a session processing method and an apparatus.

### BACKGROUND

An MBMS (Multimedia Broadcast Multicast Service, multimedia broadcast multicast service) is applied to unidirectional point-to-multipoint multimedia services. A network operator may provide multimedia data such as a streaming media broadcast and an advertising broadcast to terminals in a designated area by means of broadcasting.

Data communication between a BM-SC (Broadcast-Multicast Service Centre, broadcast multicast service centre) and a user equipment is called an MBMS session. The BM-SC initiates establishment or deletion of an MBMS session and sends an MBMS session request to an MBMS GW (MBMS-GateWay, multimedia broadcast multicast service network element), so that the MBMS GW allocates or releases relevant resources required by the MBMS session; afterwards, the MBMS GW notifies a downlink network element, which is an MME (Mobility Management Entity, mobility management entity) or an SGSN (Serving GPRS Support Node, serving general packet radio service support node), to allocate or release relevant resources required by the MBMS session; and then the MME or the SGSN notifies a radio access network to allocate or release relevant resources required by the MBMS session.

In the prior art process of implementing MBMS sessions, when an MBMS session does not run normally for a continuous period of time, that is, when no data is passed through for a continuous period within an MBMS session, a residual MBMS session is generated, and the residual MBMS session continues to occupy resources of the BM-SC, the MBMS GW, and the MME/SGSN, thereby causing a waste of network resources.

WO 2012/063813 A1 discloses a mobile communication system which is capable of effectively using network resources by defining a control method for releasing network resources by a counting function of a base station device. In a mobile communication system of the present invention for performing broadcast data distribution by an MBMS bearer service from a BM-SC to a mobile station device which is connected to a base station device, via a GGSN and an SGSN for which an MBMS bearer has been established, the base station device, if broadcast data distribution which has been associated with the MBMS bearer context is to be stopped, transmits to the SGSN a session stop request which has been associated with the MBMS bearer context, stops the broadcast data distribution, and releases the MBMS bearer resource for the SGSN.

### SUMMARY

Embodiments of the present invention provide a session processing method and an apparatus, so that when a residual session is generated due to a session traffic interruption, resources occupied by the residual session may be proactively released to save network resources.

To achieve the foregoing objectives, the present invention uses the following technical solutions:

An MBMS session processing method, including:
acquiring an interruption detection instruction that is manually input, wherein the interruption detection instruction comprises a first threshold which is same corresponding to the target MBMS session that is managed by an MBMS GW multimedia broadcast multicast service network element, or acquiring an interruption detection instruction from signaling that is corresponding to the target MBMS session and is sent by an uplink network element, wherein the interruption detection instruction comprises a first threshold corresponding to the indicated target MBMS session;
starting a timer corresponding to the target MBMS session that is indicated in the interruption detection instruction, and resetting a value of a preset counter corresponding to the target MBMS session to zero;
acquiring, when the timer corresponding to the target MBMS session reaches a speci-fied timeout limit, traffic generated by the target MBMS session;
when currently acquired traffic which is generated by the target MBMS session equals previously acquired traffic which is generated by the target MBMS session, increasing the value of the preset counter by one or increasing the value of the preset counter by one time unit, wherein a value of one time unit is a time duration from when the timer value is zero to when the timer reaches the specified timeout limit; and
   releasing, when the value of the preset counter equals the first threshold, the resources occupied by the target MBMS session.

A network element, including:
an acquiring unit, configured to acquire an interruption detection instruction that is manually input, wherein the interruption detection instruction comprises a first threshold which is same corresponding to the target MBMS session that is managed by an MBMS GW multimedia broadcast multicast service network element; or
   configured to acquire the interruption detection instruction from signaling that is corresponding to the target MBMS session and is sent by an uplink network element, wherein the interruption detection instruction comprises a first threshold corresponding to the indicated target MBMS session;
a detection unit comprising: a setting
module, configured to start a timer corresponding to the target MBMS session that is indicated in the interruption detection instruction, and reset a value of a preset counter corresponding to the target MBMS session to zero;
   a traffic acquiring module, configured to acquire, when the timer corresponding to the target MBMS session reaches a specified timeout limit, traffic generated by the target MBMS session; and
   a value determining module, configured to increase the value of the preset counter by one or increase the value of the preset counter by one time unit when currently acquired traffic which is generated by the target MBMS session equals previously acquired traffic which is generated by the target MBMS session, wherein a value of one time unit is a time duration from when the timer value is zero to when the timer reaches the specified timeout limit; and
   a processing unit, configured to release, when the value of the preset counter equals the first threshold, the resources occupied by the target MBMS session.

The embodiments of the present invention provide a session processing method and an apparatus, where when a network element acquires an interruption detection instruction, the network element performs traffic interruption detection on a target MBMS session that is indicated in the interruption detection instruction; and when network element detects that traffic of the target MBMS session is interrupted, the network element releases resources occupied by the target MBMS session. The embodiments of the present invention resolve the problem in the prior art that an MBMS session continues to occupy resources of network elements when the MBMS session does not run normally for a continuous period of time. In the embodiments of the present invention, when a residual session is generated due to a session traffic interruption, resources occupied by the residual session may be proactively released to save network resources.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a session processing method according to Embodiment 1 of the present invention;
FIG. 2 is a flowchart of another session processing method according to Embodiment 1 of the present invention;
FIG. 3 is a flowchart of still another session processing method according to Embodiment 1 of the present invention;
FIG. 4 is a flowchart of yet another session processing method according to Embodiment 1 of the present invention;
FIG. 5 is a flowchart of yet another session processing method according to Embodiment 1 of the present invention;
FIG. 6 is a structural diagram of a network element according to Embodiment 2 of the present invention;
FIG. 7 is a structural diagram of a detection unit in a network element according to Embodiment 2 of the present invention;
FIG. 8 is a structural diagram of a detection unit in a network element according to Embodiment 2 of the present invention; and
FIG. 9 is a structural diagram of another network element according to Embodiment 2 of the present invention.

### DESCRIPTION OF EMBODIMENTS

The following describes in detail a session processing method and an apparatus in the embodiments of the present invention with reference to the accompanying drawings.

### Embodiment 1

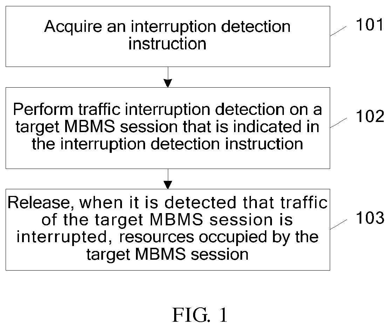

A session processing method is provided in accordance with this embodiment of the present invention. As shown in FIG. 1, the method is executed by an MBMS GW and includes:
101. Acquire an interruption detection instruction;
102. Perform traffic interruption detection on a target MBMS session that is indicated in the interruption detection instruction; and
103. Release, when it is detected that traffic of the target MBMS session is interrupted, resources occupied by the target MBMS session.

In a session processing method provided in this embodiment of the present invention, an interruption detection instruction is acquired, traffic interruption detection is performed on a target MBMS session that is indicated in the interruption detection instruction, and when it is detected that traffic of the target MBMS session is interrupted, resources occupied by the target MBMS session are released. This embodiment of the present invention resolves the prior art problem of an MBMS session continuing to occupy resources of network elements when the MBMS session does not run normally for a continuous period of time. In this embodiment, when a residual session is generated due to a session traffic interruption, resources occupied by the residual session may be proactively released to save network resources.

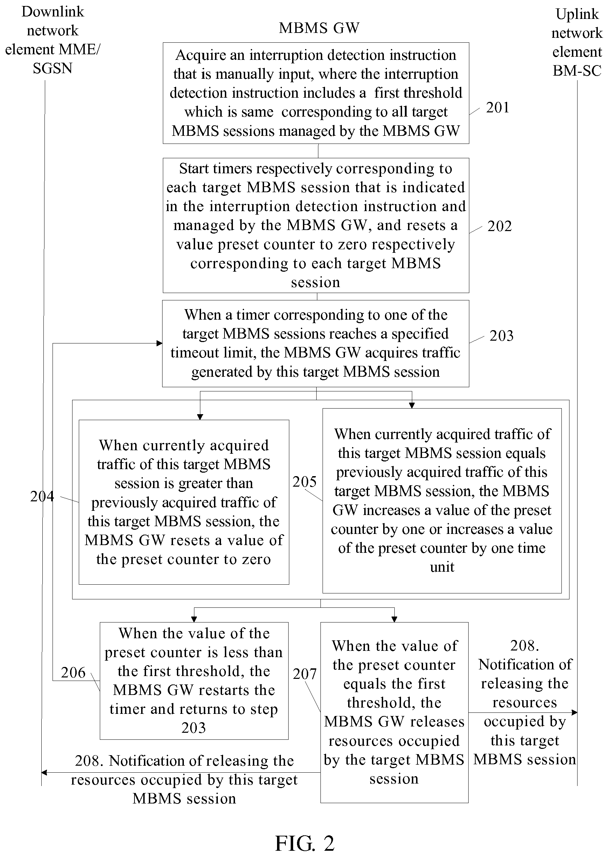

A manner for implementing a session processing method provided in this embodiment of the present invention is described by using an example in which a network element MBMS GW processes a residual MBMS session. Network maintenance personnel configure a first threshold on the MBMS GW in advance which is same for all established MBMS sessions, and issue an interruption detection instruction to the MBMS GW, so that the MBMS GW performs real-time detection on traffic generated by all the MBMS sessions and performs related processing on a residual MBMS session. As shown in FIG. 2, specific steps are as follows:
201. The MBMS GW acquires an interruption detection instruction that is manually input, where the interruption detection instruction contains a first threshold which is same corresponding to a target MBMS session that is managed by the MBMS GW.

The step of acquiring an interruption detection instruction that is manually input is specifically acquiring an interruption detection instruction input by network maintenance personnel. In this embodiment of the present invention, residual MBMS session processing is implemented at an MBMS GW level, and a first threshold is configured which is same for all target MBMS sessions managed by the MBMS GW.

After acquiring an interruption detection instruction, the MBMS GW starts a timer corresponding to the target MBMS session that is indicated in the interruption detection instruction, and resets a value of a preset counter corresponding to the target MBMS session to zero. One session corresponds to one timer and one preset counter. Details are described in step 202.
202. The MBMS GW starts timer corresponding to the target MBMS session that is indicated in the interruption detection instruction and managed by the MBMS GW, and resets preset counters respectively corresponding to each target MBMS session.

Each target MBMS session has a respective timer and preset counter. Timers corresponding to the target MBMS sessions have a same specified timeout limit. For example, the timeout limit is set to one minute. In this embodiment, the first threshold is configured at an MBMS GW level, which means that the first threshold is configured for all the target MBMS sessions; the following description uses one target MBMS session as an example.

The purpose of setting a timer for each session is to avoid mistakenly identifying a normal session with a relatively short interruption as a residual session. For example, if no timer is set, an interval for each detection may be one second or even shorter; however, it is a normal phenomenon that an interruption of approximately one second may occur in some normal sessions. Such an interruption is not an interruption that would cause a residual session, and resources occupied by a session with such an interruption do not need to be released. It can be seen that, by setting a timer (for example, by setting a timeout limit of a timer to one minute; apparently, a different timeout limit may also be set according to an actual application requirement), the problem of mistakenly identifying a normal session with such a short interruption as a residual session can be avoided.
203. When the timer corresponding to one of the target MBMS sessions reaches a specified timeout limit, the MBMS GW acquires traffic generated by this target MBMS session.

The acquired traffic which is generated by this target MBMS session is total traffic generated until the timer reaches the specified timeout limit. For example, the specified timeout limit of the timer corresponding to this target MBMS session is one minute. One minute later, the MBMS GW acquires total traffic generated by the target MBMS session within the time period at the time point after one minute.
204. When the currently acquired traffic of this target MBMS session is greater than previously acquired traffic of this target MBMS session, the MBMS GW resets a value of the preset counter to zero.

When the currently acquired traffic of this target MBMS session is greater than the previously acquired traffic of this target MBMS session, it indicates that within the specified timeout limit of the currently started timer, there is data passed through during this target MBMS session and no interruption occurs, and the MBMS GW resets the value of the preset counter to zero.
205. When the currently acquired traffic of this target MBMS session equals the previously acquired traffic of this target MBMS session, the MBMS GW increases the value of the preset counter by one or increases the value of the preset counter by one time unit, where one time unit is a time duration from when the timer value is zero to when the timer reaches the specified timeout limit.

When the currently acquired traffic of this target MBMS session equals the previously acquired traffic of this target MBMS session, it indicates that within the specified timeout limit of the currently started timer, there is no data passed through during this target MBMS session and a temporary data interruption occurs, and the MBMS GW increases the value of the preset counter by one or by one time unit.

Optionally, the value of the preset counter is increased by one; in this case, the value of the preset counter is used to indicate the number of session interruptions; and
optionally, the value of the preset counter is increased by one time unit; in this case, the value of the preset counter is used to indicate a session interruption duration.
206. When the value of the preset counter is less than the first threshold, the MBMS GW restarts the timer and returns to step 203.

Optionally, when the value of the preset counter is increased by one in the foregoing step 205, the first threshold may be set to a threshold on the number of interruptions; and

Optionally, when the value of the preset counter is increased by one time unit in the foregoing step 205, the first threshold may be set to a threshold on an interruption duration.

When the value of the preset counter continues to be less than the first threshold after being increased by one or by one time unit or after being reset to zero, it indicates that the number of interruptions or an interruption duration of the target MBMS session is less than the first threshold, the timer is restarted, step 203 is repeated to perform traffic detection on the target MBMS session, so as to release, when it is detected that traffic of this target MBMS session is interrupted, resources occupied by this target MBMS session. Details are described in step 207.
207. When the value of the preset counter equals the first threshold, the MBMS GW releases resources occupied by this target MBMS session.

Optionally, the first threshold may be set to a threshold on the number of interruptions. When the value of the preset counter equals the first threshold, it indicates that the number of interruptions in this target MBMS session reaches the specified first threshold and a residual MBMS session is generated. In order not to waste network resources, the MBMS GW releases the resources occupied by this target MBMS session.

Optionally, the first threshold may also be set to a threshold on an interruption duration, and an interruption duration of the preset counter is compared with the first threshold. For example, the specified timeout limit of the timer is one minute and a duration specified by the first threshold is 1440 minutes (24 hours). When the value of the preset counter reaches 1440 minutes, the MBMS GW releases the resources occupied by this target MBMS session.

In addition, when the value of the preset counter equals the first threshold, the MBMS GW releases the resources occupied by this target MBMS session, and at the same time, needs to notify uplink and downlink network elements to release the resources occupied by this target MBMS session. As shown in FIG. 2, step 208 is performed after step 207 is performed.
208. The MBMS GW notifies uplink and downlink network elements to release the resources occupied by this target MBMS session.

Specifically, the MBMS GW notifies, by using a Session Termination Request (session termination request) message, an uplink network element BM-SC to release the resources occupied by this target MBMS session, and notifies, by using an MBMS Session Stop (multimedia broadcast multicast service session stop) message, a downlink network element MME/SGSN to release the resources occupied by this target MBMS session.

Optionally, this target MBMS session whose occupied resources have been released may be recorded or may generate a log, and the present invention is not limited thereto.

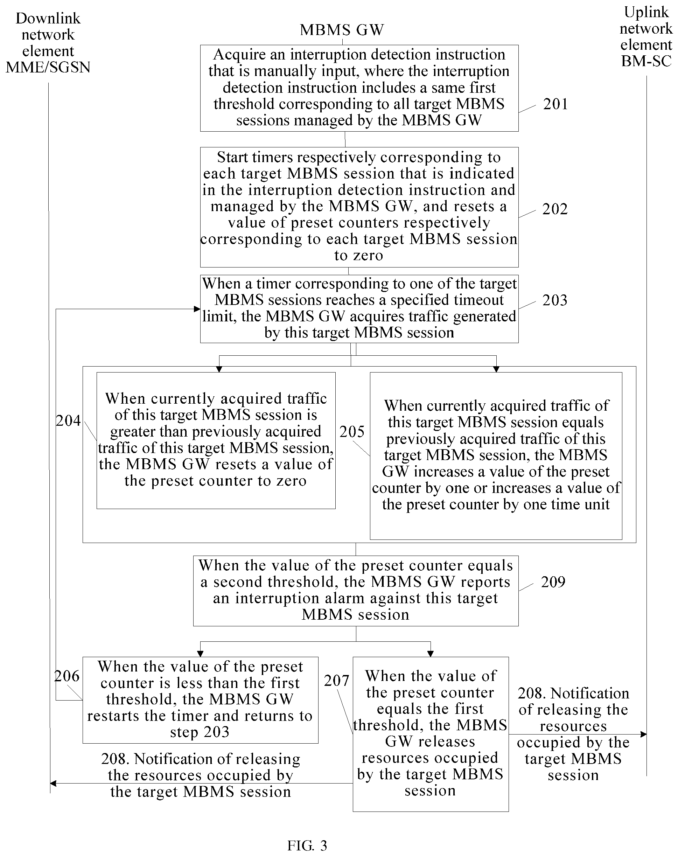

In addition, optionally, if the interruption detection instruction input by network maintenance personnel further includes a second threshold, and the second threshold is less than the first threshold, as shown in FIG. 3, step 209 is performed prior to step 206.
209. When the value of the preset counter equals the second threshold, the MBMS GW reports an interruption alarm against this target MBMS session.

For a target MBMS session during which no data is passed through for a long time, the MBMS GW reports an interruption alarm against the target MBMS session, so that network maintenance personnel can notice the interrupted target MBMS session in time and perform related processing as required.

Optionally, the second threshold may also be set to a threshold on an interruption duration, and the interruption duration of the preset counter is compared with the second threshold.

Optionally, when network maintenance personnel input an interruption detection stop instruction, the MBMS GW stops interruption detection on all the target MBMS sessions.

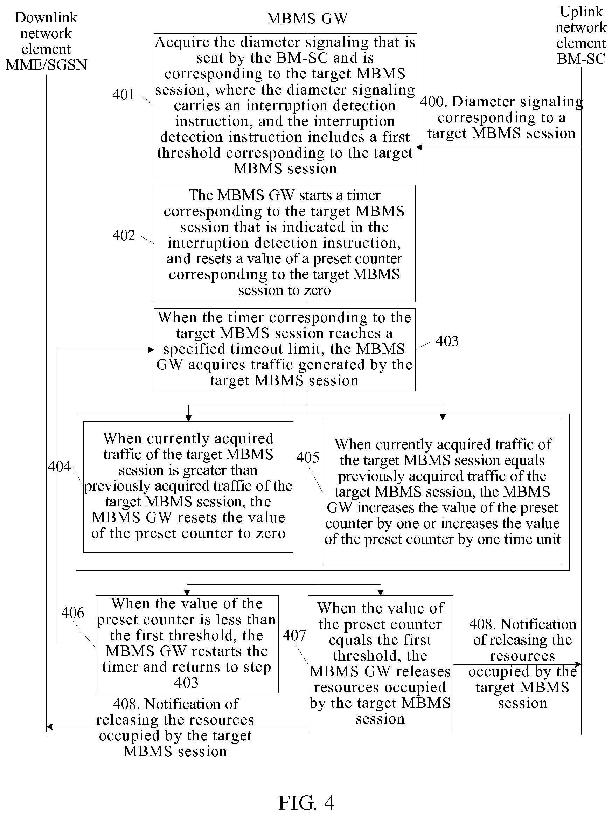

Another manner for implementing this embodiment of the present invention is described by using an example in which a network element MBMS GW processes a residual MBMS session. Signaling corresponding to an MBMS session is delivered by the BM-SC to the MBMS GW and an interruption detection instruction and a respective first threshold are configured for each target MBMS session. As shown in FIG. 4, specific steps are as follows:
400. The uplink network element BM-SC sends diameter signaling corresponding to a target MBMS session to the MBMS GW, where the diameter signaling carries an interruption detection instruction, and the interruption detection instruction contains a first threshold corresponding to the target MBMS session.
401. The MBMS GW acquires the diameter signaling that is sent by the BM-SC and is corresponding to the target MBMS session, where the diameter signaling carries the interruption detection instruction, and the interruption detection instruction contains the first threshold corresponding to the target MBMS session.
402. The MBMS GW starts a timer corresponding to the target MBMS session that is indicated in the interruption detection instruction, and resets a value of a preset counter corresponding to the target MBMS session to zero.

In this implementation, interruption detection is performed only on an MBMS session targeted by an interruption detection instruction; however, in the foregoing implementations, interruption detection is performed on all MBMS sessions managed by the MBMS GW. In addition, in this implementation, each MBMS session has a first threshold, and the first threshold of each MBMS session targeted by an interruption detection instruction may be different; however, in the foregoing implementations, a first threshold of all the MBMS sessions is the same. Therefore, in this implementation, interruption detection is performed at an MBMS session level. This implementation is more tailored to a respective MBMS session. In addition, all target MBMS sessions have their own respective timers and preset counters, and timers corresponding to all the target MBMS sessions have a same specified timeout limit. The following description uses one MBMS session as an example.

The purpose of setting a timer for each session is to avoid mistakenly identifying a normal session with a relatively short interruption as a residual session. For example, if no timer is set, an interval for each detection may be one second or even shorter; however, it is a normal phenomenon that an interruption of approximately one second may occur in some normal sessions. Such an interruption is not an interruption that would cause a residual session, and resources occupied by a session with such an interruption do not need to be released. It can be seen that, by setting a timer (for example, by setting a timeout limit of a timer to one minute; apparently, a different timeout limit may also be set according to an actual application requirement), the problem of mistakenly identifying a normal session with such a short interruption as a residual session can be avoided.

The diameter signaling in step 401 is signaling that is sent between the MBMS GW and the BM-SC over a Diameter link; private extension is performed on the diameter signaling; and the interruption detection instruction is carried in the diameter signaling, where the interruption detection instruction contains the first threshold corresponding to the target MBMS session.
403. When the timer corresponding to the target MBMS session reaches a specified timeout limit, the MBMS GW acquires traffic generated by the target MBMS session.

The acquired traffic which is generated by the target MBMS session is total traffic generated until the timer reaches the specified timeout limit. For example, the specified timeout limit of the timer corresponding to the target MBMS session is one minute. One minute later, the MBMS GW acquires total traffic generated by the target MBMS session within the time period at the time point after one minute.
404. When the currently acquired traffic of the target MBMS session is greater than previously acquired traffic of the target MBMS session, the MBMS GW resets the value of the preset counter to zero.

When the currently acquired traffic of the target MBMS session is greater than the previously acquired traffic of the target MBMS session, it indicates that within the specified timeout limit of the currently started timer, there is data passed through during the target MBMS session and no interruption occurs, and the MBMS GW resets the value of the preset counter to zero.
405. When the currently acquired traffic of the target MBMS session equals the previously acquired traffic of the target MBMS session, the MBMS GW increases the value of the preset counter by one or increases the value of the preset counter by one time unit, where one time unit is a time duration from when the timer value is zero to when the timer reaches the specified timeout limit.

When the currently acquired traffic of the target MBMS session equals the previously acquired traffic of the target MBMS session, it indicates that within the specified timeout limit of the currently started timer, there is no data passed through during the target MBMS session and a temporary data interruption occurs, and the MBMS GW increases the value of the preset counter by one or by one time unit.

Optionally, the value of the preset counter is increased by one; in this case, the value of the preset counter is used to indicate the number of session interruptions; and
optionally, the value of the preset counter is increased by one time unit; in this case, the value of the preset counter is used to indicate a session interruption duration.
406. When the value of the preset counter is less than the first threshold, the MBMS GW restarts the timer and returns to step 403.

Optionally, when the value of the preset counter is increased by one in the foregoing step 405, the first threshold may be set to a threshold on the number of interruptions; and

Optionally, when the value of the preset counter is increased by one time unit in the foregoing step 405, the first threshold may be set to a threshold on an interruption duration.

When the value of the preset counter continues to be less than the first threshold after being increased by one or by one time unit or after being reset to zero, it indicates that the number of interruptions or an interruption duration of the target MBMS session is less than the first threshold, the timer is restarted, step 403 is repeated to perform traffic detection on the target MBMS session, so as to release, when it is detected that traffic of the target MBMS session is interrupted, resources occupied by the target MBMS session. Details are described in step 407.
407. When the value of the preset counter equals the first threshold, the MBMS GW releases resources occupied by the target MBMS session.

Optionally, the first threshold may be set to a threshold on the number of interruptions. When the value of the preset counter equals the first threshold, it indicates that the number of interruptions in the target MBMS session reaches the specified first threshold and a residual MBMS session is generated. In order not to waste network resources, the MBMS GW releases the resources occupied by the target MBMS session.

Optionally, the first threshold may also be set to a threshold on an interruption duration, and interruption duration of the preset counter is compared with the first threshold. For example, when the specified timeout limit of the timer is one minute and a duration specified by the first threshold is 1440 minutes (24 hours); when the value of the preset counter reaches 1440 minutes, the MBMS GW releases the resources occupied by the target MBMS session.

In addition, when the value of the preset counter equals the first threshold, the MBMS GW releases the resources occupied by the target MBMS session, and at the same time, needs to notify uplink and downlink network elements to release the resources occupied by the target MBMS session. As shown in FIG. 4, step 408 is performed after step 407 is performed.
408. The MBMS GW notifies uplink and downlink network elements to release the resources occupied by the target MBMS session.

Specifically, the MBMS GW notifies, by using a Session Termination Request (session termination request) message, an uplink network element BM-SC to release the resources occupied by the target MBMS session, and notifies, by using an MBMS Session Stop (multimedia broadcast multicast service session stop) message, a downlink network element MME/SGSN to release the resources occupied by the target MBMS session.

Optionally, the target MBMS session whose occupied resources have been released may be recorded or may generate a log, and the present invention is not limited thereto.

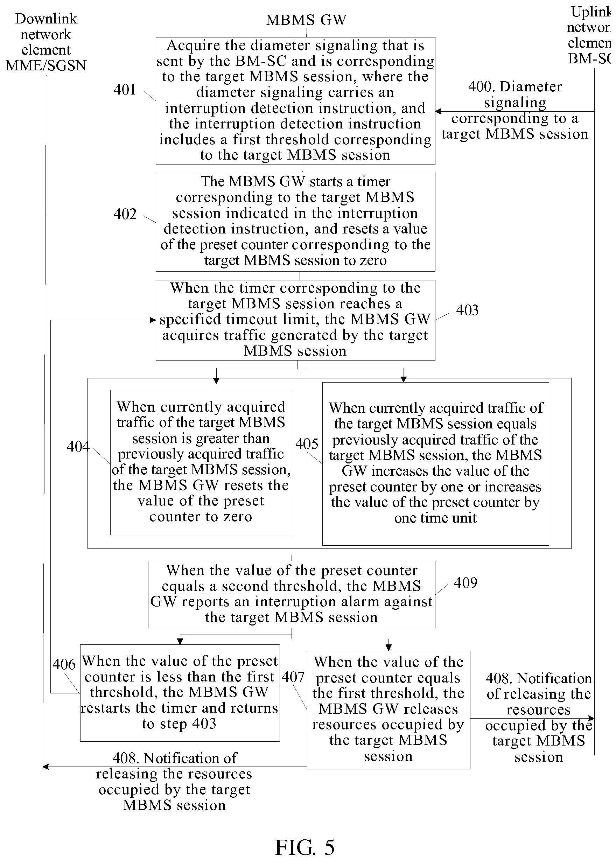

In addition, optionally, if signaling that is sent by the uplink network element BM-SC and is corresponding to the target MBMS session further includes a second threshold, and the second threshold is less than the first threshold, as shown in FIG. 5, step 409 is performed prior to step 406.
409. When the value of the preset counter equals the second threshold, the MBMS GW reports an interruption alarm against the target MBMS session.

For a target MBMS session during which no data is passed through for a long time, the MBMS GW reports an interruption alarm against the target MBMS session, so that network maintenance personnel can notice the interrupted target MBMS session in time and perform related processing as required.

Optionally, the second threshold may also be set to a threshold on an interruption duration, and the interruption duration of the preset counter is compared with the second threshold.

Optionally, when network maintenance personnel input an interruption detection stop instruction, the MBMS GW stops interruption detection on all the target MBMS sessions.

When a BM-SC is reset due to an exception and an MBMS session that has been established is lost, if resources occupied by the MBMS session needs to be released, the BM-SC cannot send a request to an MBMS GW, so resources occupied by the MBMS session cannot be released. The embodiments of the present invention can also apply to this statution. According to the embodiments of the present invention, the MBMS GW is able to perform detection on an MBMS session. When an MBMS session does not run normally for a continuous period of time, the MBMS GW releases the resources occupied by the MBMS session and notifies a downlink network element MME/SGSN to release the resources occupied by the MBMS session.

The network involved in the present invention is not limited to a multimedia broadcast multicast service network, and another network that is capable of providing Internet access may also be applied in the present invention. The network element that executes the present invention is not limited to an MBMS GW, and a network element, which is capable of providing an alarm and notifying another network element at a session level, in another network may also be applied in the present invention. A network element that delivers an interruption detection instruction is not limited to a BM-SC, and another network element capable of instructing session or threshold settings may also be applied in the present invention.

### Embodiment 2

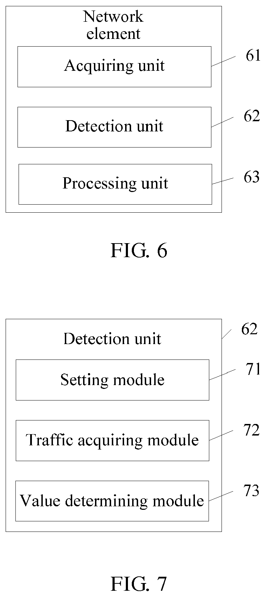

A network element provided in this embodiment of the present invention, as shown in FIG. 6, includes an acquiring unit 61, a detection unit 62, and a processing unit 63.

The acquiring unit 61 is configured to acquire an interruption detection instruction;
the detection unit 62 is configured to perform traffic interruption detection on a target MBMS session that is indicated in the interruption detection instruction; and
the processing unit 63 is configured to release, when it is detected that traffic of the target MBMS session is interrupted, resources occupied by the target MBMS session.

In the network element provided in this embodiment of the present invention, the acquiring unit acquires the interruption detection instruction, the detection unit performs traffic interruption detection on the target MBMS session that is indicated in the interruption detection instruction, and when the detection unit detects that traffic of the target MBMS session is interrupted, a the processing unit releases resources occupied by the target MBMS session. This embodiment of the present invention resolves the prior art problem of an MBMS session continuing to occupy resources of network elements when the MBMS session does not run normally for a continuous period of time. In this embodiment, when a residual session is generated due to a session traffic interruption, resources occupied by the residual session may be proactively released to save network resources.

In an optional implementation, the acquiring unit is specifically configured to acquire an interruption detection instruction that is manually input, where the interruption detection instruction contains a first threshold which is same corresponding to the target MBMS session that is managed by an MBMS GW.

In another optional implementation, the acquiring unit is specifically configured to acquire the interruption detection instruction from signaling that is corresponding to the target MBMS session and sent by an uplink network element, where the interruption detection instruction contains a first threshold corresponding to the target MBMS session.

Optionally, in the two implementations, as shown in FIG 7, the detection unit 62 includes:
a setting module 71, configured to start a timer corresponding to the target MBMS session that is indicated in the interruption detection instruction, and reset a value of a preset counter corresponding to the target MBMS session to zero;
a traffic acquiring module 72, configured to acquire, when the timer corresponding to the target MBMS session reaches a specified timeout limit, traffic generated by the target MBMS session; and
a value determining module 73, configured to increase a value of the preset counter by one or increase the value of the preset counter by one time unit when the currently acquired traffic of the target MBMS session equals previously acquired traffic of the target MBMS session, where one time unit is a time duration from when the timer value is zero to when the timer reaches the specified timeout limit; and
accordingly, the processing unit is specifically configured to release, when the value of the preset counter equals the first threshold, the resources occupied by the target MBMS session.

In addition, optionally, in the two implementations, the value determining module is further configured to reset the value of the preset counter to zero when the currently acquired traffic of the target MBMS session is greater than the previously acquired traffic of the target MBMS session.

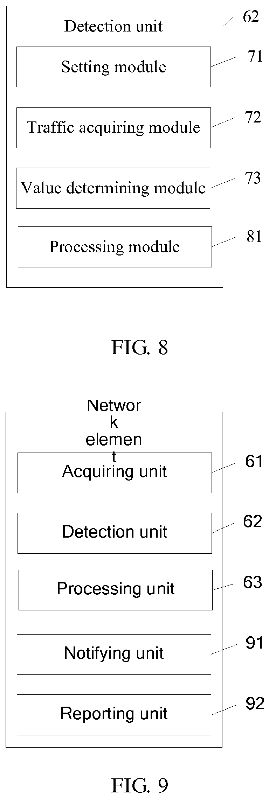

As shown in FIG. 8, the detection unit 62 further includes:
a processing module 81, configured to, when the value of the preset counter is less than the first threshold, restart the timer, and return to perform the step of acquiring, when the timer corresponding to the target MBMS session reaches the specified timeout limit, traffic generated by the target MBMS session.

Optionally, in the two implementations, as shown in FIG. 9, the network element further includes:
a notifying unit 91, configured to notify uplink and downlink network elements to release the resources occupied by the target MBMS session.

When the interruption detection instruction acquired by the acquiring unit further contains a second threshold and the second threshold is less than the first threshold, the network element further includes a reporting unit 92, configured to report an interruption alarm against the target MBMS session when the value of the preset counter equals the second threshold.

For an operating process of the network element, refer to a processing process of a network element in the foregoing session processing method.

A network element in this embodiment of the present invention may be an MBMS GW, or may be a network element, which is capable of providing an alarm and notifying another network element at a session level, in another network, which is not limited herein.

From the foregoing descriptions of the embodiments, a person skilled in the art may clearly understand that the present invention may be implemented by software in addition to necessary universal hardware or by hardware only. In most circumstances, the former is a preferred implementation. Based on such an understanding, the technical solutions of the present invention essentially or the part contributing to the prior art may be implemented in a form of a software product. The software product is stored in a readable storage medium, such as a floppy disk, a hard disk or an optical disc of a computer, and includes several instructions for instructing a computer device (which may be a personal computer, a server, or a network device) to perform the methods described in the embodiments of the present invention.

The foregoing descriptions are merely specific implementations of the present invention, but are not intended to limit the protection scope of the present invention.
present invention shall fall within the protection scope of the present invention. Therefore, the protection scope of the present invention shall be subject to the protection scope of the claims.

## Claims

1. An MBMS session processing method, comprising:
acquiring an interruption detection instruction that is manually input, wherein the interruption detection instruction comprises a first threshold which is same corresponding to the target MBMS session that is managed by an MBMS GW multimedia broadcast multicast service network element, or acquiring an interruption detection instruction from signaling that is corresponding to the target MBMS session and is sent by an uplink network element, wherein the interruption detection instruction comprises a first threshold corresponding to the indicated target MBMS session;
starting a timer corresponding to the target MBMS session that is indicated in the interruption detection instruction, and resetting a value of a preset counter corresponding to the target MBMS session to zero;
acquiring, when the timer corresponding to the target MBMS session reaches a specified timeout limit, traffic generated by the target MBMS session;
when currently acquired traffic which is generated by the target MBMS session equals previously acquired traffic which is generated by the target MBMS session, increasing the value of the preset counter by one or increasing the value of the preset counter by one time unit, wherein a value of one time unit is a time duration from when the timer value is zero to when the timer reaches the specified timeout limit; and
releasing, when the value of the preset counter equals the first threshold, the resources occupied by the target MBMS session.

2. The method according to claim 1, wherein the method further comprises:
resetting the value of the preset counter to zero when the currently acquired traffic which is generated by the target MBMS session is greater than the previously acquired traffic which is generated by the target MBMS session.

3. The method according to claim 1 or 2, wherein the method further comprises:
when the value of the preset counter is less than the first threshold, restarting the timer, and returning to perform the step of
acquiring, when the timer corresponding to the target MBMS session reaches the specified timeout limit, traffic generated by the target MBMS session.

4. The method according to one of claims 1 to 3, wherein the method further comprises: notifying uplink and downlink network elements to release the resources occupied by the target MBMS session.

5. The method according to one of claims 1 to 4, wherein the interruption detection instruction further comprises a second threshold, and the second threshold is less than the first threshold; and
the method further comprises:
reporting an interruption alarm against the target MBMS session when the value of the preset counter equals the second threshold.

6. A network element, comprising:
an acquiring unit, configured to acquire an interruption detection instruction that is manually input, wherein the interruption detection instruction comprises a first threshold which is same corresponding to the target MBMS session that is managed by an MBMS GW multimedia broadcast multicast service network element; or
configured to acquire the interruption detection instruction from signaling that is corresponding to the target MBMS session and is sent by an uplink network element, wherein the interruption detection instruction comprises a first threshold corresponding to the indicated target MBMS session;
a detection unit, comprising: a setting module, configured to start a timer corresponding to the target MBMS session that is indicated in the interruption detection instruction, and reset a value of a preset counter corresponding to the target MBMS session to zero;
a traffic acquiring module, configured to acquire, when the timer corresponding to the target MBMS session reaches a specified timeout limit, traffic generated by the target MBMS session; and
a value determining module, configured to increase the value of the preset counter by one or increase the value of the preset counter by one time unit when currently acquired traffic which is generated by the target MBMS session equals previously acquired traffic which is generated by the target MBMS session, wherein a value of one time unit is a time duration from when the timer value is zero to when the timer reaches the specified timeout limit; and
a processing unit, configured to release, when the value of the preset counter equals the first threshold, the resources occupied by the target MBMS session.

7. The network element according to claim 6, wherein:
the value determining module is further configured to reset the value of the preset counter to zero when the currently acquired traffic which is generated by the target MBMS session is greater than the previously acquired traffic which is generated by the target MBMS session.

8. The network element according to claim 6 or 7, wherein the detection unit further comprises:
a processing module, configured to restart the timer, and return to perform the step of acquiring, when the timer corresponding to the target MBMS session reaches the specified timeout limit, traffic generated by the target MBMS session.

9. The network element according to one of claims 6 to 8, wherein the network element further comprises:
a notifying unit, configured to notify uplink and downlink network elements to release the resources occupied by the target MBMS session.

10. The network element according to one of claims 6 to 9, wherein the interruption detection instruction acquired by the acquiring unit further comprises a second threshold, and the second threshold is less than the first threshold; and
the network element further comprises:
a reporting unit, configured to report an interruption alarm against the target MBMS session when the value of the preset counter equals the second threshold.

11. The network element according to one of claims 6 to 10, wherein the network element is a multimedia broadcast multicast service network element MBMS GW.

## Patentansprüche

1. MBMS-Sitzungsverarbeitungsverfahren, das Folgendes umfasst:
Erfassen einer Unterbrechungsdetektionsanweisung, die manuell eingegeben wird, wobei die Unterbrechungsdetektionsanweisung eine erste Schwelle umfasst, die die gleiche ist, die der Ziel-MBMS-Sitzung entspricht, die durch ein MBMS-GW bzw. Multimedia-Broadcast-Multicast-Dienst-Netzwerkelement verwaltet wird, oder Erfassen einer Unterbrechungsdetektionsanweisung aus einer Signalisierung, die der Ziel-MBMS-Sitzung entspricht und durch ein Aufwärtsstreckennetzwerkelement gesendet wird, wobei die Unterbrechungsdetektionsanweisung eine erste Schwelle umfasst, die der angegebenen Ziel-MBMS-Sitzung entspricht;
Starten eines Timers, der der Ziel-MBMS-Sitzung entspricht, die in der Unterbrechungsdetektionsanweisung angegeben wird, und Zurücksetzen eines Werts eines voreingestellten Zählers, der der Ziel-MBMS-Sitzung entspricht, zu null;
Erfassen, wenn der Timer, der der Ziel-MBMS-Sitzung entspricht, eine spezifizierte Timeout-Grenze erreicht, von Verkehr, der durch die Ziel-MBMS-Sitzung erzeugt wird;
wenn gegenwärtig erfasster Verkehr, der durch die Ziel-MBMS-Sitzung erzeugt wird, gleich einem zuvor erfassten Verkehr ist, der durch die Ziel-MBMS-Sitzung erzeugt wird, Erhöhen des Werts des voreingestellten Zählers um eins oder Erhöhen des Werts des voreingestellten Zählers um eine Zeiteinheit, wobei ein Wert einer Zeiteinheit eine Zeitdauer ist, von wann der Timer-Wert null ist, zu wann der Timer die spezifizierte Timeout-Grenze erreicht; und
Freigeben, wenn der Wert des voreingestellten Zählers gleich der ersten Schwelle ist, der Ressourcen, die durch die Ziel-MBMS-Sitzung belegt werden.

2. Verfahren nach Anspruch 1, wobei das Verfahren ferner Folgendes umfasst:
Zurücksetzen des Werts des voreingestellten Zählers zu null, wenn der gegenwärtig erfasste Verkehr, der durch die Ziel-MBMS-Sitzung erzeugt wird, größer als der zuvor erfasste Verkehr ist, der durch die Ziel-MBMS-Sitzung erzeugt wird.

3. Verfahren nach Anspruch 1 oder 2, wobei das Verfahren ferner Folgendes umfasst:
wenn der Wert des voreingestellten Zählers kleiner als die erste Schwelle ist, Neustarten des Timers und Zurückkehren zum Durchführen des Schritts des Erfassens, wenn der Timer, der der Ziel-MBMS-Sitzung entspricht, die spezifizierte Timeout-Grenze erreicht, von Verkehr, der durch die Ziel-MBMS-Sitzung erzeugt wird.

4. Verfahren nach einem der Ansprüche 1 bis 3, wobei das Verfahren ferner Folgendes umfasst:
Benachrichtigen von Aufwärtsstrecken- und Abwärtsstreckennetzwerkelementen, sodass die Ressourcen, die durch die Ziel-MBMS-Sitzung belegt werden, freigegeben werden.

5. Verfahren nach einem der Ansprüche 1 bis 4, wobei die Unterbrechungsdetektionsanweisung ferner eine zweite Schwelle umfasst und die zweite Schwelle kleiner als die erste Schwelle ist; und
das Verfahren ferner Folgendes umfasst:
Melden eines Unterbrechungsalarms für die Ziel-MBMS-Sitzung, wenn der Wert des voreingestellten Zählers gleich der zweiten Schwelle ist.

6. Netzwerkelement, das Folgendes umfasst:
eine Erfassungseinheit, die konfiguriert ist zum Erfassen einer Unterbrechungsdetektionsanweisung, die manuell eingegeben wird, wobei die Unterbrechungsdetektionsanweisung eine erste Schwelle umfasst, die die gleiche ist, die der Ziel-MBMS-Sitzung entspricht, die durch ein MBMS-GW bzw. Multimedia-Broadcast-Multicast-Dienst-Netzwerkelement verwaltet wird; oder
konfiguriert ist zum Erfassen der Unterbrechungsdetektionsanweisung aus einer Signalisierung, die der Ziel-MBMS-Sitzung entspricht und durch ein Aufwärtsstreckennetzwerkelement gesendet wird, wobei die Unterbrechungsdetektionsanweisung eine erste Schwelle umfasst, die der angegebenen Ziel-MBMS-Sitzung entspricht;
eine Detektionseinheit, die Folgendes umfasst: ein Einstellmodul, das konfiguriert ist zum Starten eines Timers, der der Ziel-MBMS-Sitzung entspricht, die in der Unterbrechungsdetektionsanweisung angegeben wird, und zum Zurücksetzen eines Werts eines voreingestellten Zählers, der der Ziel-MBMS-Sitzung entspricht, zu null; ein Verkehrserfassungsmodul, das konfiguriert ist zum Erfassen, wenn der Timer, der der Ziel-MBMS-Sitzung entspricht, eine spezifizierte Timeout-Grenze erreicht, von Verkehr, der durch die Ziel-MBMS-Sitzung erzeugt wird; und
ein Wertbestimmungsmodul, das konfiguriert ist zum Erhöhen des Werts des voreingestellten Zählers um eins oder zum Erhöhen des Werts des voreingestellten Zählers um eine Zeiteinheit, wenn gegenwärtig erfasster Verkehr, der durch die Ziel-MBMS-Sitzung erzeugt wird, gleich einem zuvor erfassten Verkehr ist, der durch die Ziel-MBMS-Sitzung erzeugt wird, wobei ein Wert einer Zeiteinheit eine Zeitdauer ist, von wann der Timer-Wert null ist, zu wann der Timer die spezifizierte Timeout-Grenze erreicht; und
eine Verarbeitungseinheit, die konfiguriert ist zum Freigeben, wenn der Wert des voreingestellten Zählers gleich der ersten Schwelle ist, der Ressourcen, die durch die Ziel-MBMS-Sitzung belegt werden.

7. Netzwerkelement nach Anspruch 6, wobei:
das Wertbestimmungsmodul ferner konfiguriert ist zum Zurücksetzen des Werts des voreingestellten Zählers zu null, wenn der gegenwärtig erfasste Verkehr, der durch die Ziel-MBMS-Sitzung erzeugt wird, größer als der zuvor erfasste Verkehr ist, der durch die Ziel-MBMS-Sitzung erzeugt wird.

8. Netzwerkelement nach Anspruch 6 oder 7, wobei die Detektionseinheit ferner Folgendes umfasst:
ein Verarbeitungsmodul, das konfiguriert ist zum Neustarten des Timers und zum Zurückkehren zum Durchführen des Schritts des Erfassens, wenn der Timer, der der Ziel-MBMS-Sitzung entspricht, die spezifizierte Timeout-Grenze erreicht, von Verkehr, der durch die Ziel-MBMS-Sitzung erzeugt wird.

9. Netzwerkelement nach einem der Ansprüche 6 bis 8, wobei das Netzwerkelement ferner Folgendes umfasst:
eine Benachrichtigungseinheit, die konfiguriert ist zum Benachrichtigen von Aufwärtsstrecken- und Abwärtsstreckennetzwerkelementen, sodass die Ressourcen, die durch die Ziel-MBMS-Sitzung belegt werden, freigegeben werden.

10. Netzwerkelement nach einem der Ansprüche 6 bis 9, wobei die Unterbrechungsdetektionsanweisung, die durch die Erfassungseinheit erfasst wird, ferner eine zweite Schwelle umfasst und die zweite Schwelle kleiner als die erste Schwelle ist; und
das Netzwerkelement ferner Folgendes umfasst:
eine Meldeeinheit, die konfiguriert ist zum Melden eines Unterbrechungsalarms für die Ziel-MBMS-Sitzung, wenn der Wert des voreingestellten Zählers gleich der zweiten Schwelle ist.

11. Netzwerkelement nach einem der Ansprüche 6 bis 10, wobei das Netzwerkelement ein Multimedia-Broadcast-Multicast-Dienst-Netzwerkelement bzw. MBMS-GW ist.

## Revendications

1. Procédé de traitement de session MBMS consistant :
à acquérir une instruction de détection d'interruption qui est entrée manuellement, dans lequel l'instruction de détection d'interruption comprend un premier seuil qui est identique correspondant à la session MBMS cible qui est gérée par un élément de réseau de service de diffusion/multidiffusion multimédia (MBMS GW) ou à acquérir une instruction de détection d'interruption à partir d'une signalisation qui correspond à la session MBMS cible et est envoyée par un élément de réseau de liaison montante, dans lequel l'instruction de détection d'interruption comprend un premier seuil correspondant à la session MBMS cible indiquée ;
à mettre en marche un temporisateur correspondant à la session MBMS cible qui est indiquée dans l'instruction de détection d'interruption et à réinitialiser une valeur d'un compteur préréglé correspondant à la session MBMS cible à zéro ;
à acquérir, lorsque le temporisateur correspondant à la session MBMS cible atteint une limite de temporisation spécifiée, un trafic généré par la session MBMS cible ;
lorsqu'un trafic à présent acquis qui est généré par la session MBMS cible, est égal à un trafic acquis auparavant qui est généré par la session MBMS cible, à augmenter la valeur du compteur préréglé de un ou à augmenter la valeur du compteur préréglé d'une unité de temps, dans lequel une valeur d'une unité de temps est une durée allant du moment où la valeur de temporisateur est zéro jusqu'au moment où le temporisateur atteint la limite de temporisation spécifiée ; et
lorsque la valeur du compteur préréglé est égale au premier seuil, à libérer les ressources occupées par la session MBMS cible.

2. Procédé selon la revendication 1, dans lequel le procédé consiste en outre :
à réinitialiser la valeur du compteur préréglé à zéro lorsque le trafic à présent acquis, qui est généré par la session MBMS cible, est plus important que le trafic acquis auparavant qui est généré par la session MBMS cible.

3. Procédé selon la revendication 1 ou 2, dans lequel le procédé consiste en outre :
lorsque la valeur du compteur préréglé est inférieure au premier seuil, à remettre en marche le temporisateur et à revenir en arrière pour réaliser l'étape consistant à acquérir, lorsque le temporisateur correspondant à la session MBMS cible atteint la limite de temporisation spécifiée, un trafic généré par la session MBMS cible.

4. Procédé selon l'une quelconque des revendications 1 à 3, dans lequel le procédé consiste en outre :
à notifier à des éléments de réseau de liaison montante et de liaison descendante de libérer les ressources occupées par la session MBMS cible.

5. Procédé selon l'une quelconque des revendications 1 à 4, dans lequel l'instruction de détection d'interruption comprend en outre un second seuil et le second seuil est inférieur au premier seuil ; et
le procédé consiste en outre :
à rapporter une alarme d'interruption à l'encontre de la session MBMS cible lorsque la valeur du compteur préréglé est égale au second seuil.

6. Élément de réseau comprenant :
une unité d'acquisition, configurée pour acquérir une instruction de détection d'interruption qui est entrée manuellement, dans lequel l'instruction de détection d'interruption comprend un premier seuil qui est identique correspondant à la session MBMS cible qui est gérée par un élément de réseau de service de diffusion/multidiffusion multimédia (MBMS GW) ; ou
configurée pour acquérir l'instruction de détection d'interruption à partir d'une signalisation qui correspond à la session MBMS cible et est envoyée par un élément de réseau de liaison montante, dans lequel l'instruction de détection d'interruption comprend un premier seuil correspondant à la session MBMS cible indiquée ;
une unité de détection comprenant : un module de réglage, configuré pour mettre en marche un temporisateur correspondant à la session MBMS cible qui est indiquée dans l'instruction de détection d'interruption et pour réinitialiser une valeur d'un compteur préréglé correspondant à la session MBMS cible à zéro ;
un module d'acquisition de trafic, configuré pour acquérir, lorsque le temporisateur correspondant à la session MBMS cible atteint une limite de temporisation spécifiée, un trafic généré par la session MBMS cible ; et
un module de détermination de valeur, configuré pour augmenter la valeur du compteur préréglé de un ou pour augmenter la valeur du compteur préréglé d'une unité de temps lorsqu'un trafic à présent acquis qui est généré par la session MBMS cible, est égal à un trafic acquis auparavant qui est généré par la session MBMS cible, dans lequel une valeur d'une unité de temps est une durée allant du moment où la valeur de temporisateur est zéro jusqu'au moment où le temporisateur atteint la limite de temporisation spécifiée ; et
une unité de traitement, configurée pour libérer, lorsque la valeur du compteur préréglé est égale au premier seuil, les ressources occupées par la session MBMS cible.

7. Élément de réseau selon la revendication 6, dans lequel :
le module de détermination de valeur est en outre configuré pour réinitialiser la valeur du compteur préréglé à zéro lorsque le trafic à présent acquis, qui est généré par la session MBMS cible, est plus important que le trafic acquis auparavant qui est généré par la session MBMS cible.

8. Élément de réseau selon la revendication 6 ou 7, dans lequel l'unité de détection comprend en outre :
un module de traitement, configuré pour remettre en marche le temporisateur et pour revenir en arrière pour réaliser l'étape consistant à acquérir, lorsque le temporisateur correspondant à la session MBMS cible atteint la limite de temporisation spécifiée, un trafic généré par la session MBMS cible.

9. Élément de réseau selon l'une quelconque des revendications 6 à 8, dans lequel l'élément de réseau comprend en outre :
une unité de notification, configurée pour notifier à des éléments de réseau de liaison montante et de liaison descendante de libérer les ressources occupées par la session MBMS cible.

10. Élément de réseau selon l'une quelconque des revendications 6 à 9, dans lequel l'instruction de détection d'interruption acquise par l'unité d'acquisition comprend en outre un second seuil et le second seuil est inférieur au premier seuil ; et l'élément de réseau comprend en outre :
une unité de rapport, configurée pour rapporter une alarme d'interruption à l'encontre de la session MBMS cible lorsque la valeur du compteur préréglé est égale au second seuil.

11. Élément de réseau selon l'une quelconque des revendications 6 à 10, dans lequel l'élément de réseau est un élément de réseau de service de diffusion/multidiffusion multimédia (MBMS GW).
